# EUROPEAN PATENT SPECIFICATION

(11) **EP 2 162 345 B1**
(45) Date of publication and mention of the grant of the patent: **27.10.2010**
(21) Application number: 08760509.3
(22) Date of filing: 04.06.2008
(51) Int. Cl.: B62K 21/12

(54) **HANDLEBAR WITH ELASTIC HINGES**
LENKER MIT FEDERSCHARNIEREN
GUIDON AVEC ARTICULATIONS ÉLASTIQUES

(30) Priority: 15.06.2007 EP 07425378
(43) Date of publication of application: 17.03.2010
(73) Proprietor: DOMINO S.p.A., 23896 Sirtori, Frazione Bevera (Lecco) (IT)
(72) Inventor: MENGHINI, Luca, I-22030 Magreglio (Como) (IT)
(74) Representative: Ripamonti, Enrico
(86) International application number: PCT/EP2008/056929
(87) International publication number: WO 2008/151974

(56) References cited:
- WO-A-92/20565
- DE-A1- 4 323 501
- FR-A- 2 868 388
- GB-A- 565 696

## Description

The present invention relates to a handlebar in accordance with the introduction to the main claim.

Handlebars are known comprising a central portion and end portions, said central portion and each end portion being connected together by a corresponding intermediate portion having its axis inclined to the adjacent portions. In particular, handlebars are known with a rectilinear central portion, with each intermediate portion and end portion having its own different inclination to the adjacent portion.

These handlebars, with portions of constant and/or variable cross-section, are described for example in US5257552, US5950497 and US5064157. By using said handlebars it has been found that, while optimally fulfilling their purpose, they present a considerable rigidity particularly in the connection regions between two adjacent portions. This rigidity leads to a consequent uncontrolled deformation capacity of the handlebar, depending on is use and the vehicle type.

In addition, the presence of the intermediate portions of variable cross-section does not allow crossbars to be fixed to them to stiffen the handlebar.

DE-A-4323501 discloses an handlebar or streering wheel for two-wheeled motor vehicles wherein hand-grips are located onto final portions of the handlebars and are separated by the latter by means of rubber elements. These elements allow vibration not to be transferred from the handlebar to each hand-grip and hence to the vehicle user hands. This prior art does not relate to an integral handlebar body having different portions connected by means of parts operating as elastic hinges and allowing the handlebar to elastically deform in a controlled manner when the handlebar body is subjected to stresses.

An object of the present invention is to provide a handlebar which is an improvement if compared to the known handlebars.

An object of the present invention is to provide a handlebar of the stated type which has a capacity to deform in a controlled manner as a result of stresses which it receives during the use of the vehicle on which it is mounted.

Another object is to provide a handlebar of the stated type with which a usual crossbar can be associated.

These and further objects which will be apparent to the expert of the art are attained by a handlebar in accordance with the accompanying claims.

The present invention will be more apparent from the accompanying drawings, which are provided by way of non-limiting example and in which:
Figure 1 is a front view of a handlebar according to the invention;
Figure 2 is a view of the handlebar of Figure 1 seen from above;
Figure 3 is a view of a first variant of the handlebar of Figure 1 seen from above;
Figure 4 is a front view of a second variant of the handlebar of Figure 1;
Figure 5 is a view of the second variant of the handlebar of Figure 1 seen from above;
Figure 6 is a front view of a detail of another variant of the handlebar of Figure 1;
Figures 7, 8 and 9 show various cross-sections, taken on the line 7-7 of Figure 1, through a part of the handlebar of Figure 1; and
Figure 10 is a front view of a detail of a further variant of the handlebar of Figure 1.

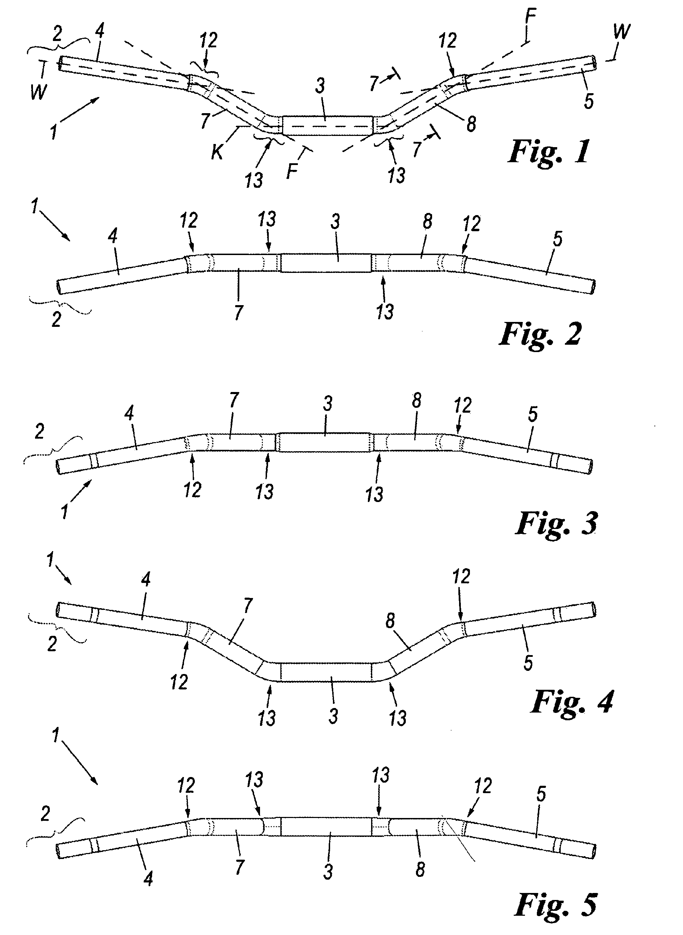

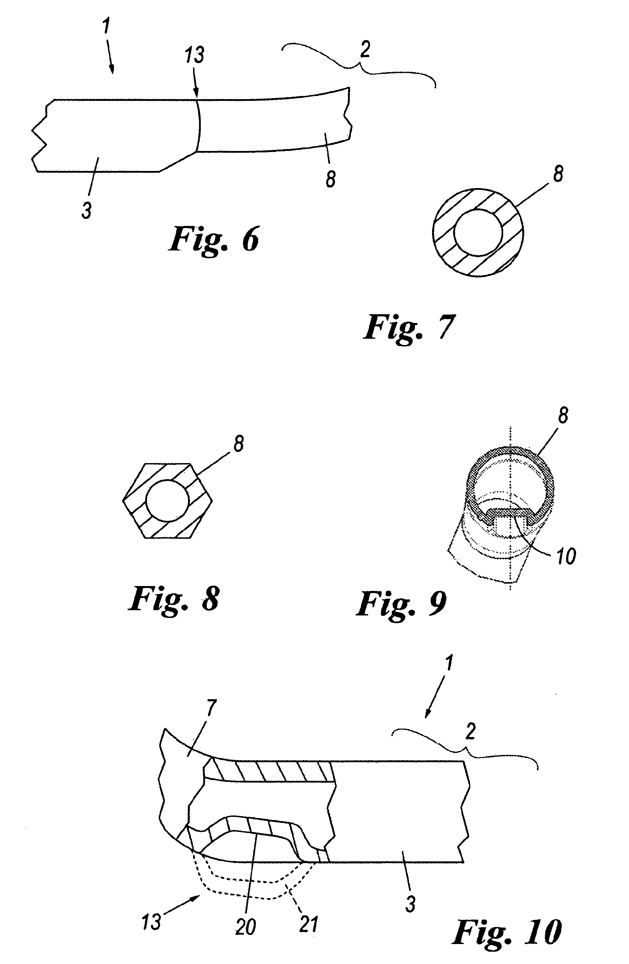

With reference to said figures, a handlebar according to the invention is indicated overall by 1 and comprises an integral body 2 presenting a central portion 3, two end or final portions 4 and 5 and intermediate portions 7 and 8 connecting the central portion 3 to corresponding end portions. The portions 3, 4, 5, 7 and 8 (see Figure 1) may all have a constant cross-section shape and are disposed with their longitudinal axes K, W (for the portions 4 and 5) and F (for the portions 7 and 8) at an angle between them. However the cross-section of said portions is not necessarily constant along their axis; for example, at least part of the said portions can have a cross-section shape which is circular (as in Figure 7), polygonal (i.e. triangular, square or multi-sided, as in Figure 8) or with longitudinal recesses or flattenings (with the recess 10 visible in the case of Figure 9). If the cross-section presents a recess 10, this can house an electric cable or a control cable connected to a control member or device associated with one of the final portions 4 and 5.

According to the invention, sudden cross-section variations are present at opposing end regions 12 and 13 of each intermediate portion 7 and 8 of the body 2, to define elastic regions acting as elastic hinges. These end regions acting as elastic hinges 12, 13 are present at the central portions 3 or final portions 4 or 5 where the corresponding intermediate portions connect to these latter. By virtue of said regions acting as elastic hinges, the handlebar can deform elastically in a controlled manner when the body 2 is subjected to stresses (of any type) during movement of the vehicle along the ground.

Said end regions 12, 13 can assume various forms: as a step with edges at 90° to the longitudinal axis of the adjacent central or final portion (Figure 1 and Figure 2); as an inclined surface along only a part of the intermediate portion (Figure 6), this offering a differentiated response by the handlebar to different stresses; or conical (Figure 3, Figure 4 and Figure 5). The end regions 12,1 3 acting as elastic hinges involve a small part of the intermediate portion, for example from 5 to 10 cm measured from the point of contact with the adjacent portion, while the remaining part of the intermediate portion is of constant cross-section.

These hinges can also be obtained by creating localized recesses 20 at the regions 12 and 13 or projections 21 in these latter (Figure 10).

By virtue of the invention, as the task of the handlebar is to transmit to the member determining the vehicle trajectory (front wheel, rudder, guide shoe, etc.) the forces which the driver applies to determine this vehicle trajectory, and also to transmit to the driver all the travel stresses which are not damped by the appropriate shock absorbers if these are used (suspensions for motor vehicles, snowmobiles, etc.), the geometry of the end portions or hinges 12, 13 enables a characteristic dynamic to be given to the handlebar which differs on the basis of the type of action being performed. This maintains high handlebar functionality because, if necessary, a usual collar can be securely fixed onto the two handlebar intermediate portions of constant cross-section, for mounting the strengthening crossbar.

Some particular embodiments of the invention have been described. Others are however possible and are to be considered as falling within the scope of the ensuing claims.

## Claims

1. A motor vehicle handlebar (1) for a vehicle such as a motorcycle or a two, three or four wheeled motor vehicle, a snowmobile or a seamobile, comprising an integral body (2) presenting a central portion (3) and final portions (4, 5) of at least partly constant cross-section shape, the central portion (3) and each final portion (4, 5) being connected together by a corresponding intermediate portion (7, 8) also of at least partly constant cross-section shape, **characterised in that** each intermediate portion (7, 8) presents, in proximity to the central portion (3) and to the corresponding final portion (4, 5), end regions (12, 13) having sudden cross-section variations, said sudden cross-section variations defining elastic regions acting as elastic hinges for the connection of said intermediate portion (7, 8) to the adjacent portions (4, 5), and said sudden cross-section variations enabling the handlebar (1) to undergo a controlled deformation thereat when subjected to stress during vehicle use.

2. A handlebar as claimed in claim 1, **characterised in that** said sudden cross-section variation is defined by a step with edges at 90° to the longitudinal axis (K, W) of the central portion (3) or adjacent final portion (4, 5).

3. A handlebar as claimed in claim 1, **characterised in that** said sudden cross-section variation is defined by a connection in the form of an inclined surface between the intermediate portion (7, 8) and the adjacent portion (3, 4, 5).

4. A handlebar as claimed in claim 1, **characterised in that** said sudden cross-section variation is defined by a connection in the form of an inclined surface present on only a part of the intermediate portion (7, 8) at the adjacent portion (3, 4, 5).

5. A handlebar as claimed in claim 1, **characterised in that** said sudden cross-section variation is defined by connection of conical pattern between the intermediate portion (7, 8) and the adjacent portion (3, 4, 5).

6. A handlebar as claimed in claim 1, **characterised in that** said sudden cross-section variation is defined by a recess (20) localized in the end region (12, 13) of the intermediate portion (7, 8).

7. A handlebar as claimed in claim 1, **characterised in that** said sudden cross-section variation is defined by a projection or thickening in the end region (12, 13) of the intermediate portion (7, 8).

8. A handlebar as claimed in claim 1, **characterised in that** at least one from among the central portion (3), each intermediate portion (7, 8) and each final portion (4, 5) has, at least on one part thereof, a circular cross-section.

9. A handlebar as claimed in claim 1, **characterised in that** at least one from among the central portion (3), each intermediate portion (7, 8) and each final portion (4, 5) has, at least on one part thereof, a polygonal cross-section.

10. A handlebar as claimed in claim 1, **characterised in that** at least one from among the central portion (3), each intermediate portion (7, 8) and each final portion (4, 5) presents a longitudinal recess (10) on at least one part thereof.

11. A handlebar as claimed in claim 1, **characterised in that** at least one part of at least one from among the central portion (3), each intermediate portion (7, 8) and each final portion (4, 5) presents a longitudinal flattening.

## Patentansprüche

1. Kraftfahrzeuglenker (1) für ein Fahrzeug, wie zum Beispiel in Motorrad oder ein zwei-, drei- oder vierrädriges Kraftfahrzeug, ein Schneemobil oder ein Wassermobil, umfassend einen ganzheitlichen Körper (2), welcher einen mittleren Abschnitt (3) und Endabschnitte (4, 5) mit zumindest teilweiser konstanter Querschnittsform bietet, wobei der mittlere Abschnitt (3) und jeder Endabschnitt (4, 5) über einen entsprechenden Zwischenabschnitt (7, 8) mit ebenfalls zumindest teilweise konstanter Querschnittsform miteinander verbunden sind, **dadurch gekennzeichnet, dass** jeder Zwischenabschnitt (7, 8) in der Nähe des Zwischenabschnitts (3) und dem entsprechenden Endabschnitt (4, 5) Endbereiche (12, 13) bietet, welche plötzliche Querschnittsveränderungen aufweisen, wobei die plötzlichen Querschnittsveränderungen elastische Bereiche definieren, welche als elastische Gelenke für die Verbindung des mittleren Abschnitts (7, 8) mit den benachbarten Abschnitten (4, 5) wirkt, und wobei die plötzlichen Querschnittsveränderungen ermöglichen, dass der Lenker (1) einer kontrollierten Deformation daran unterliegt, wenn er während einer Fahrzeugbenutzung einer Belastung ausgesetzt wird.

2. Lenker nach Anspruch 1, **dadurch gekennzeichnet, dass** die plötzliche Querschnittsveränderung durch eine Stufe mit Rändern mit 90° zu der Längsachse (K, W) des mittleren Abschnitts (3) oder des benachbarten Endabschnitts (4, 5) definiert ist.

3. Lenker nach Anspruch 1, **dadurch gekennzeichnet, dass** die plötzliche Querschnittsveränderung durch eine Verbindung in der Form einer geneigten Fläche zwischen dem Zwischenabschnitt (7, 8) und dem benachbarten Abschnitt (3, 4, 5) definiert ist.

4. Lenker nach Anspruch 1, **dadurch gekennzeichnet, dass** die plötzliche Querschnittsveränderung durch eine Verbindung in der Form einer geneigten Fläche definiert ist, welche nur an einem Teil des Zwischenabschnitts (7, 8) bei dem benachbarten Abschnitt (3, 4, 5) vorhanden ist.

5. Lenker nach Anspruch 1, **dadurch gekennzeichnet, dass** die plötzliche Querschnittsveränderung durch eine Verbindung von konischer Form zwischen dem Zwischenabschnitt (7, 8) und dem benachbarten Abschnitt (3, 4, 5) definiert ist.

6. Lenker nach Anspruch 1, **dadurch gekennzeichnet, dass** die plötzliche Querschnittsveränderung durch eine Aussparung (20) definiert ist, welche in dem Endbereich (12, 13) des Zwischenabschnitts (7, 8) angeordnet ist.

7. Lenker nach Anspruch 1, **dadurch gekennzeichnet, dass** die plötzliche Querschnittsveränderung durch einen Vorsprung oder eine Verdickung in dem Endbereich (12, 13) des Zwischenabschnitts (7, 8) definiert ist.

8. Lenker nach Anspruch 1, **dadurch gekennzeichnet, dass** mindestens einer von dem mittleren Abschnitt (3), jedem Zwischenabschnitt (7, 8) und jedem Endabschnitt (4, 5) zumindest an einem Teil davon einen kreisförmigen Querschnitt aufweist.

9. Lenker nach Anspruch 1, **dadurch gekennzeichnet, dass** mindestens einer von dem mittleren Abschnitt (3), jedem Zwischenabschnitt (7, 8) und jedem Endabschnitt (4, 5) zumindest an einem Teil davon einen mehreckigen Querschnitt aufweist.

10. Lenker nach Anspruch 1, **dadurch gekennzeichnet, dass** mindestens einer von dem mittleren Abschnitt (3), jedem Zwischenabschnitt (7, 8) und jedem Endabschnitt (4, 5) eine Längsaussparung (10) an zumindest einem Teil davon bietet.

11. Lenker nach Anspruch 1, **dadurch gekennzeichnet, dass** zumindest ein Teil von mindestens einem von dem mittleren Abschnitt (3), jedem Zwischenabschnitt (7, 8) und jedem Endabschnitt (4, 5) eine Längsabflachung bietet.

## Revendications

1. Guidon (1) de véhicule à moteur pour un véhicule tel qu'une motocyclette ou un véhicule à moteur à deux, trois ou quatre roues, une moto des neiges ou un véhicule marin, comprenant un corps d'un seul tenant (2) présentant une partie centrale (3) et des parties terminales (4, 5) ayant au moins en partie une forme de section transversale constante, la partie centrale (3) et chaque partie terminale (4, 5) étant raccordées ensemble par une partie intermédiaire (7, 8) correspondante ayant également au moins en partie une forme de section transversale constante, **caractérisé en ce que** chaque partie intermédiaire (7, 8) présente, à proximité de la partie centrale (3) et de la partie terminale (4, 5) correspondante, des régions d'extrémité (12, 13) ayant de subites variations de section transversale, lesdites subites variations de section transversale définissant des régions élastiques agissant comme des charnières élastiques pour le raccordement de ladite partie intermédiaire (7, 8) aux parties adjacentes (4, 5), et lesdites subites variations de section transversale permettant au guidon (1) de subir une déformation contrôlée lorsqu'il est soumis à une contrainte pendant l'utilisation du véhicule.

2. Guidon selon la revendication 1, **caractérisé en ce que** ladite subite variation de section transversale est définie par un échelon avec des bords à 90° par rapport à l'axe longitudinal (K, W) de la partie centrale (3) ou la partie terminale (4, 5) adjacente.

3. Guidon selon la revendication 1, **caractérisé en ce que** ladite subite variation de section transversale est définie par un raccordement se présentant sous la forme d'une surface inclinée entre la partie intermédiaire (7, 8) et la partie adjacente (3, 4, 5).

4. Guidon selon la revendication 1, **caractérisé en ce que** ladite subite variation de section transversale est définie par un raccordement se présentant sous la forme d'une surface inclinée présente sur une seule partie de la partie intermédiaire (7, 8) au niveau de la partie adjacente (3, 4, 5).

5. Guidon selon la revendication 1, **caractérisé en ce que** ladite subite variation de section transversale est définie par le raccordement d'un profil conique entre la partie intermédiaire (7, 8) et la partie adjacente (3, 4, 5).

6. Guidon selon la revendication 1, **caractérisé en ce que** ladite subite variation de section transversale est définie par un évidement (20) situé dans la région d'extrémité (12, 13) de la partie intermédiaire (7, 8).

7. Guidon selon la revendication 1, **caractérisé en ce que** ladite subite variation de section transversale est définie par une saillie ou un épaississement dans la région d'extrémité (12, 13) de la partie intermédiaire (7, 8).

8. Guidon selon la revendication 1, **caractérisé en ce qu'**au moins l'une parmi la partie centrale (3), chaque partie intermédiaire (7, 8) et chaque partie terminale (4, 5) a, au moins au niveau de l'une de ses parties, une section transversale circulaire.

9. Guidon selon la revendication 1, **caractérisé en ce qu'**au moins l'une parmi la partie centrale (3), chaque partie intermédiaire (7, 8) et chaque partie terminale (4, 5) a, au moins au niveau de l'une de ses parties, une section transversale polygonale.

10. Guidon selon la revendication 1, **caractérisé en ce qu'**au moins l'une parmi la partie centrale (3), chaque partie intermédiaire (7, 8) et chaque partie terminale (4, 5) présente un évidement longitudinal (10) sur au moins l'une de ses parties.

11. Guidon selon la revendication 1, **caractérisé en ce qu'**au moins une partie d'au moins l'une parmi la partie centrale (3), chaque partie intermédiaire (7, 8) et chaque partie terminale (4, 5) présente un aplatissement longitudinal.
